# EUROPEAN PATENT APPLICATION

(11) **EP 2 894 562 A1**
(43) Date of publication of application: **15.07.2015**
(21) Application number: 15150364.6
(22) Date of filing: 07.01.2015
(51) Int. Cl.: G06F 9/44, H04L 29/08

(54) **Method of controlling device and control apparatus**

(30) Priority: 08.01.2014 KR 20140002246
(71) Applicant: Samsung Electronics Co., Ltd, Gyeonggi-do 443-742 (KR)
(72) Inventor: Cho, Chihyun, 443-742 Gyeonggi-do (KR); Heo, Changryong, 443-742 Gyeonggi-do (KR); Baek, Kunwoo, 443-742 Gyeonggi-do (KR); Woo, Moonyoung, 443-742 Gyeonggi-do (KR)
(74) Representative: Nederlandsch Octrooibureau

(57) **Abstract**

An electronic device and method are disclosed herein, the electronic device comprising a display unit, and at least one processor which may implement the method. The method may include detecting, an application being executing on a remote device, displaying a function menu associated with the application in the display unit, and in response to detecting a selection in the displayed function menu, transmitting a control signal corresponding to the selection to the remote device to control a particular function of the application.

## Description

### TECHNICAL FIELD

The present disclosure relates to a method of controlling other device.

### BACKGROUND

The functionality of portable terminals has gradually developed. At first, they could only provide one-dimensional services such as voice call and short message transmission. However, recently, a larger variety of functions have been implemented, such as note-taking, picture editing, document creation, and wireless Internet. Furthermore, the screen of the portable terminal has gradually increased in size.

Various auxiliary input devices for controlling the portable terminal have been developed. For example, portable terminals may now benefit from the addition of wireless keyboards and mouse peripherals capable of text input and scroll input, a wireless controllers for gaming, Bluetooth headsets capable of voice input and volume control and other various accessories.

### SUMMARY

In one aspect of this disclosure, a method is disclosed, including detecting, by a processor, an application being executed in a remote device, displaying, by a display, a function menu associated with the application, and in response to detecting a selection in the displayed function menu, transmitting a control signal corresponding to the selection to the remote device to control a particular function of the application.

In another aspect of this disclosure, a method for controlling an electronic device by a remote device is disclosed including: displaying, on a display unit, an image associated with an application being executed by a processor, the displayed image including at least one icon exectuable to control the application, in response to activation of a menu edting mode, displaying a function menu having at least one configurable section over the displayed image, and in response to detecting a drag gesture moving the at least one icon to the at least one configurable section, storing the moved at least one icon in the configurable section of the function menu, and transmitting the function menu containing the moved at least one icon for display to the remote device such that an input to the function menu displayed on the remote device is received by the processor to control the application running on the display unit.

In another aspect of this disclosure, an electronic device includes a display unit, and at least one processor configured to detect, an application being executing on a remote device, display a function menu associated with the application in the display unit, and in response to detecting a selection in the displayed function menu, transmit a control signal corresponding to the selection to the remote device to control a particular function of the application.

### BRIEF DESCRIPTION OF THE DRAWINGS

The present disclosure will be more apparent from the following detailed description in conjunction with the accompanying drawings, in which:
FIG. 1 is a flowchart illustrating an example method of controlling a device according to an example embodiment of the present disclosure;
FIG. 2 illustrates an example device being controlled through a function menu of another device according to an example embodiment of the present disclosure;
FIGs. 3A and 3B illustrate examples of the receiving selection of functions on one device and executing the functions on the other device, according to an example embodiment of the present disclosure;
FIGs. 4A to 4C illustrate examples of the receiving of selections of functions on one device and executing the functions on the other device, according to an example embodiment of the present disclosure;
FIG. 5 illustrates an example of assigning menu functions to the control of another device according to an example embodiment of the present disclosure;
FIG. 6 illustrates an example of assigning menu functions to the control of another device according to an example embodiment of the present disclosure;
FIG. 7 illustrates example layouts of a menu for a control device according to an example embodiment of the present disclosure;
FIGs. 8A to 8C illustrates how layout and control inputs may change on the control device in accordance with a change in a displayed process on the display device, the layout and control inputs associated with attributes of each process, according to an example embodiment of the present disclosure; and
FIG. 9 is a block diagram illustrating a control apparatus according to an example embodiment of the present disclosure.

### DETAILED DESCRIPTION

Hereinafter, example embodiments of the present disclosure will be described with reference to the accompanying drawings. It should be noted that the same elements will be designated by the same reference numerals although they are shown in different drawings. Further, a detailed description of a known function and configuration which may make the subject matter of the present disclosure unclear will be omitted. Hereinafter, it should be noted that the descriptions will be provided that may help understanding the operations provided in association with the various embodiments of the present disclosure, and other descriptions will be omitted to avoid making the subject matter of the present disclosure rather unclear.

A control apparatus according to the present disclosure may be implemented as part of an electronic device.

According to some embodiments, the electronic device may be a device with a communication function. For example, the electronic device may include at least one of a smart phone, a tablet Personal Computer (PC), a mobile phone, a video phone, an e-book reader, a desktop PC, a laptop PC, a netbook computer, a PDA, a Portable Multimedia Player (PMP), an MP3 player, a mobile medical device, a camera, a wearable device (for example, a Head-Mounted-Device (HMD) such as electronic glasses, electronic clothes, an electronic bracelet, an electronic necklace, an electronic appcessory, an electronic tattoo, and a smart watch.

According to an embodiment, an electronic device may be a smart home appliance with a communication function. The smart home appliances may include at least one of, for example, televisions, digital video disk (DVD) players, audio players, refrigerators, air conditioners, cleaners, ovens, microwaves, washing machines, air purifiers, set-top boxes, TV boxes (e.g., HomeSyncTM of Samsung, Apple TVTM, or Google TVTM ), game consoles, electronic dictionaries, electronic keys, camcorders, or electronic frames.

According to some embodiments, the electronic device may include at least one of various types of medical devices (for example, Magnetic Resonance Angiography (MRA), Magnetic Resonance Imaging (MRI), Computed Tomography (CT), a scanning machine, ultrasonic wave device and the like), a navigation device, a Global Positioning System (GPS) receiver, an Event Data Recorder (EDR), a Flight Data Recorder (FDR), a car infotainment device, ship electronic equipment (for example, navigation equipment for a ship, a gyro compass and the like), avionics, a security device, and an industrial or home robot.

According to another embodiment, the electronic devices may include at least one of furniture or a part of a building/structure having a communication function, electronic boards, electronic signature receiving devices, projectors, or various measuring equipment (e.g., equipment for a water supply, an electricity, gases or radio waves). The electronic device according to the present disclosure may be a combination of one or more of the aforementioned various devices. Further, it is obvious to those skilled in the art that the electronic device according to the present disclosure is not limited to the aforementioned devices.

Auxiliary devices sold on the market today are implemented so to control a predetermined function. Thus, the predetermined function of the auxiliary device may be controlled. However, in order to use an undecided function, other auxiliary device is utilized. That is, one auxiliary device cannot control a portable terminal, and thus respective auxiliary devices capable of controlling various functions are utilized. Thus, there is an inconvenience in that auxiliary devices should be included according to respective functions.

An example embodiment of the present disclosure is to provide a method of controlling a device and a control apparatus capable of effectively controlling other device using one control apparatus.

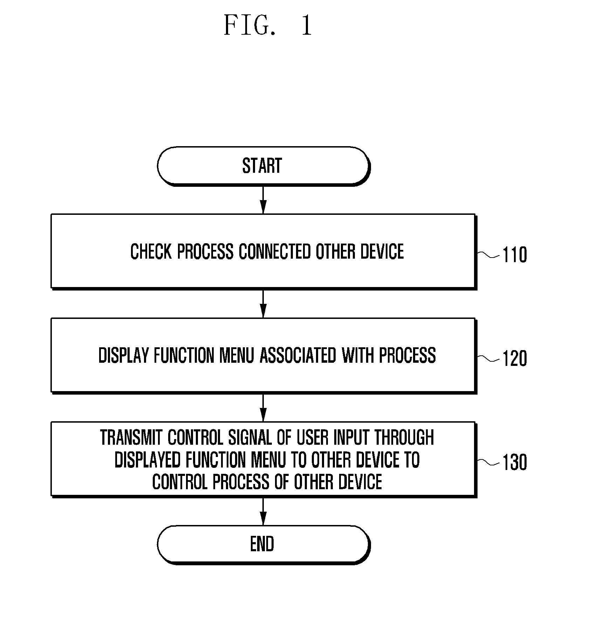

FIG. 1 is a flowchart illustrating an example method of controlling a device according to an example embodiment of the present disclosure.

A method of controlling a device of the present disclosure may be performed by a "control apparatus". The control apparatus may be a main device such as a smart phone, and may be an auxiliary device such as a wireless keyboard, a headset and the like controlling the main device.

Hereinafter, in FIG. 1, the control apparatus is described as the "auxiliary device".

Referring to FIG. 1, in step 110, the control apparatus checks a process of other device connected to the control apparatus. Here, "connected" may mean that the control apparatus is physically or electrically connected to the other device through a wire or wireless connection, and may be part of a "pairing". That is, when the control apparatus is connected to the other device through data communication, the control apparatus may check the process of the other device. The process may include at least one of an application, a program, an Operating System (OS) and middleware which are executed in the other device.

For example, the control apparatus may check whether the other device is connected to the control apparatus through wired or wireless communication. As a result of the check, when the other device is connected to the control apparatus, the control apparatus may transmit a request signal to the other device. Wireless communication may be implemented utilizing various communication schemes such as Bluetooth, Near Field Communication (NFC) or a sound wave communication, and the control apparatus may monitor in real time whether the other device is connected to the control apparatus via wireless communication. The request signal may request information for process of the other device. The other device may receive the request signal and transmit a response signal. The response signal may include information for the process of the other device. The control apparatus may analyze the process of the other device based on the response signal. In addition, the response signal may also include state information (e.g., a message notification, a battery level, a communication signal strength, and the like).

A mutual control instruction (e.g., a volume control, a media playing, a media stop, and the like) and the state information (e.g., the message notification, the battery level, the communication signal strength, and the like) of an electronic device may be exchanged through a wireless connection.

In step 120, the control apparatus displays a function menu associated with the checked process. The function menu is related to various control tools such as a volume control, playing media, direction keys, a start and an end. For example, when the checked process is "music," the control apparatus may display a function menu including at least one of "play," "stop," "search," "next song," "previous song" and "pause" associated with a media playing. In addition, when the checked process is a "game", the control apparatus may display direction keys (e.g., up, down, left and right keys) as the function menu.

In step 130, the control apparatus transmits a control signal from a user input through the displayed function menu to the other device to control the process of the other device. The user selects a desired control tool in the function menu, the control apparatus transmits a control signal associated with the selected control tool to the other device. Thus, the control apparatus may control the process of the other device by the control signal.

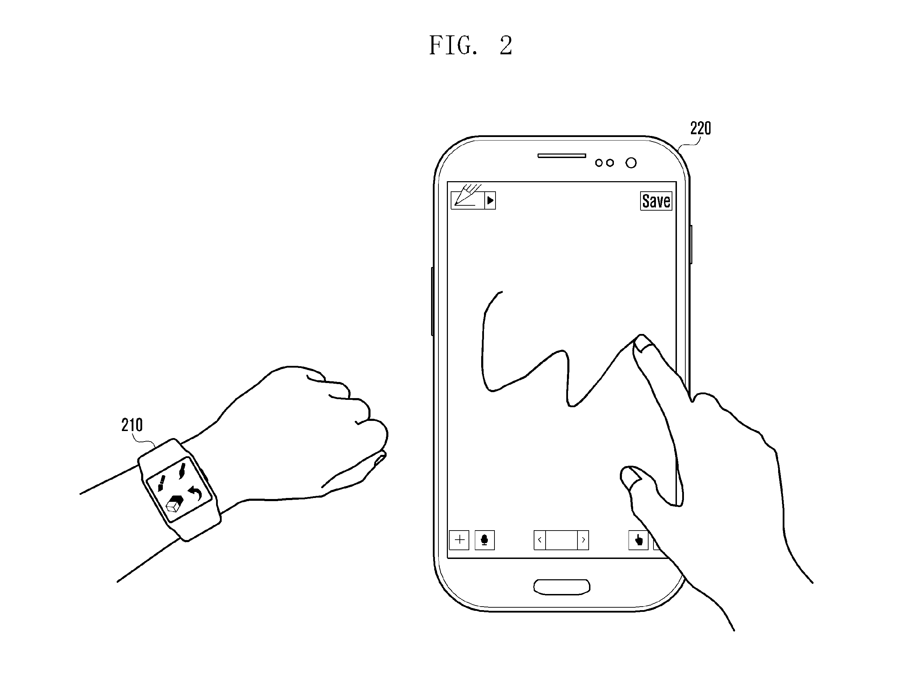

FIG. 2 illustrates an example device being controlled through a function menu of another device according to an example embodiment of the present disclosure.

Referring to FIG. 2, a control apparatus 210 may be a wearable device worn on the body of a user. In addition, the other device 220 may be a smart phone. The other device 220 may in this instance provide a larger quantity of functions and possess a bigger screen compared to the control apparatus 210. When the other device 220 executes, for example, a note program, the control apparatus 210 may be caused to display a function menu utilized in the note program, such as an option menu displaying icons for control of pen attributes, erasers, color selection, etc. A user may alter the pen attributes by selecting a type of pen such as a pen, a pencil, a highlighter pen and a fountain pen on the control apparatus 210, which may cause the pen to be altered with respect to inputs received on the other device 220. Therefore, the user may use the function menu of the control apparatus 210 to control the other device 220, rather than requiring use of a function menu displayed in the other device 220.

As another example embodiment, the function menu for each process of the control apparatus 210 may be selected and received from the user, and the control apparatus 210 may store the selected function menu in memory according to each process. Thus, when the control apparatus 210 performs the step 120 displaying a function menu associated with a process operating in the other device 220, the control apparatus may search for a function menu associated with the executing process from memory, retrieve it and display the searched function menu.

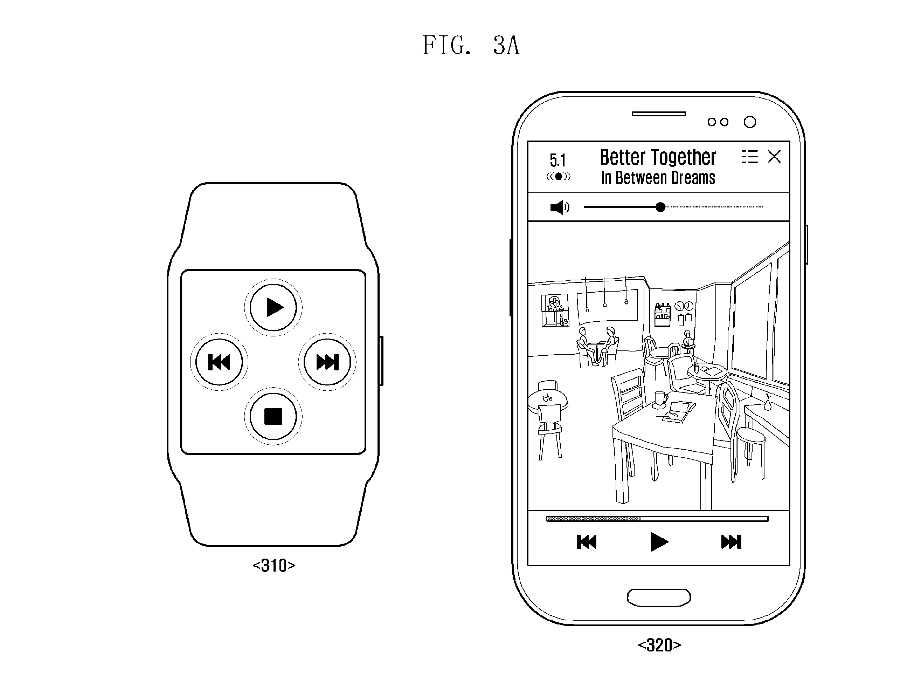

FIGs. 3A-3B illustrate examples of the receiving selection of functions on one device and executing the functions on the other device, according to an example embodiment of the present disclosure.

Referring to FIG. 3A, a music player operating on the electronic device 320 may be controlled by a function menu displayed on a paired device 310. The menu may include functions such as "play," "stop," "next track," or "previous track." The function menu may also control, for example, a volume of the playback on the electronic device 320. The menu may be received from the electronic device 320.

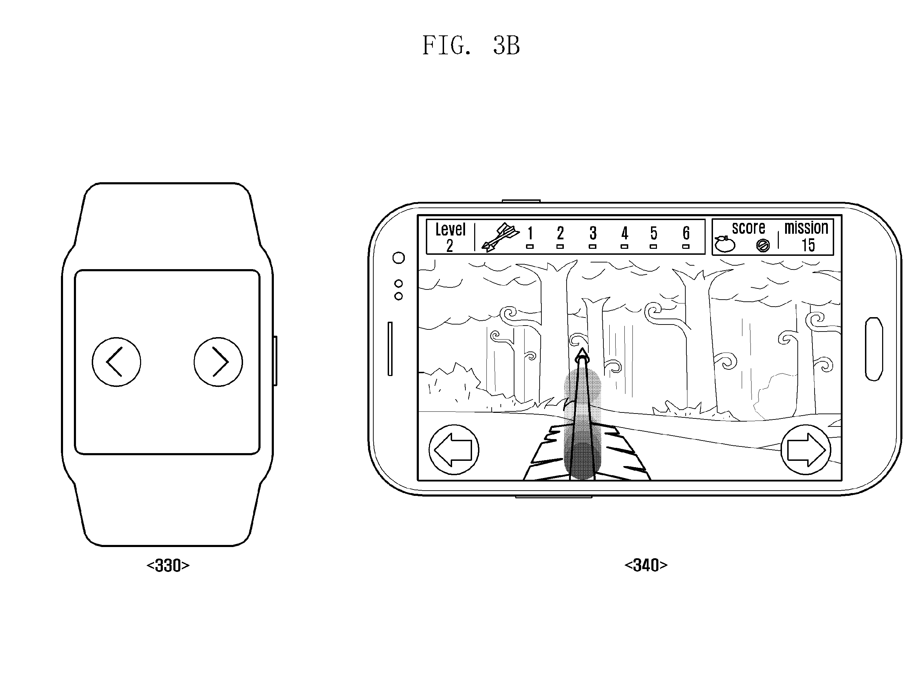

Referring to FIG. 3B, a device 340 may execute a video game, which may be controlled by a function menu displayed on another device 330. The function menu may include a left direction key and a right direction key for the "game" of the device 340. In some embodiments, the desired function menu may be selected on the device 340, and then transmitted whereupon the control apparatus 330 may receive the selected function menu. The function menu may include other control. For example, the function menu may further include an up direction key, a down direction key and an enter key related to the game. As described above, the selected function menu may be stored in the memory associated with the particular process to which it is assigned.

In another example embodiment, the control apparatus 340 may transmit a selection signal for the selected function menu from the user to the other device 330 and execute the process of the other device in association with the selected function menu by the selection signal.

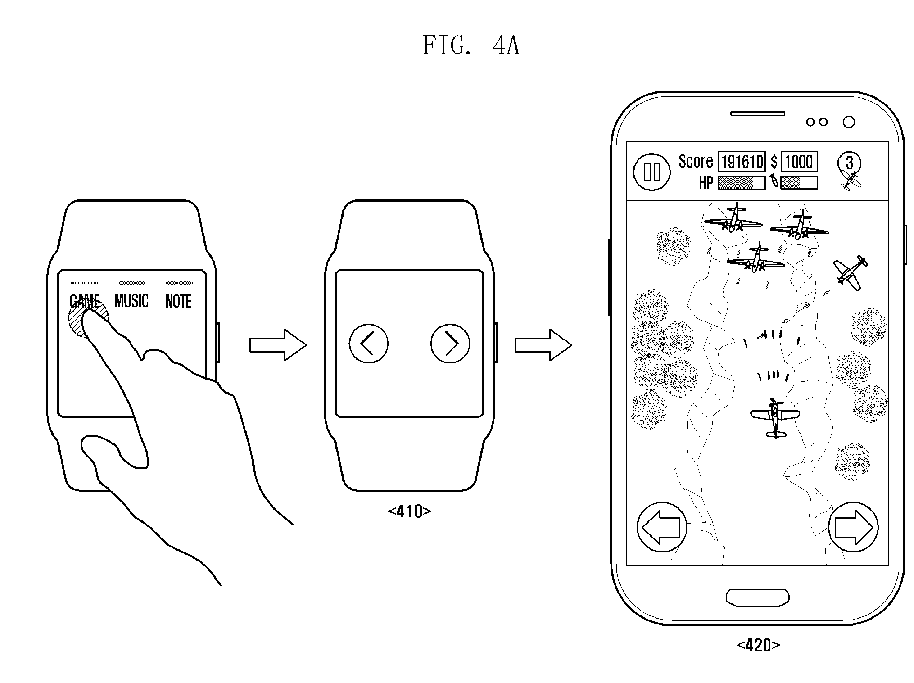

FIGs. 4A to 4C illustrate examples of the receiving of selections of functions on one device and executing the functions on the other device, according to an example embodiment of the present disclosure. Here, the process may be an "application" installed in the control apparatus.

The control apparatus may store a plurality of function menus, each associated to an executable process in a memory and displayable on a screen. Referring to FIG. 4A, when a function menu 410 is selected by the user, the control apparatus may receive the selection, display the function menu on the screen, and transmit the selection as a signal to the other device 420. The selection signal may include information for a "game application," and the other device 420 may execute the game application according to the received selection signal. When the game is executed, the control apparatus may display the function menu associated with the game to the screen and may receive a control inputs from the user through the displayed function menu. The control inputs may be transmitted as a control signal to the other device 420 to control the game being executed on the other device 420.

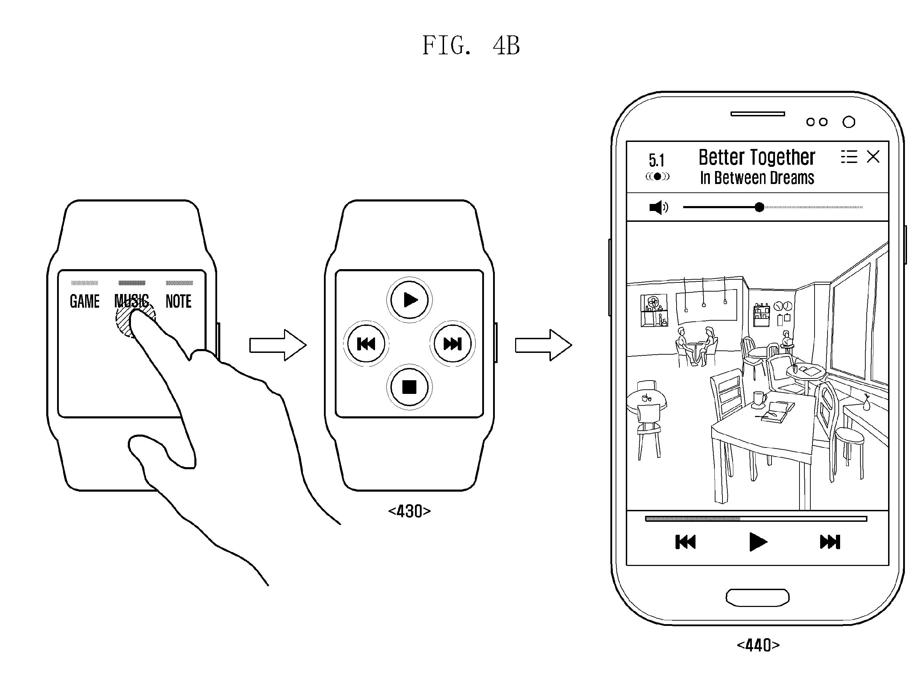

Referring to FIG. 4B, a function menu associated with a music player is selected by the user. The control apparatus 430 receives the selection, and transmits a selection signal associated with the selected function menu to other device 440. The other device 440 may receive the selection signal and execute a music application according to the received selection signal. When the music player application is executed, the control apparatus 430 may display the function menu associated with the music. The control apparatus 430 may thus receive control inputs to the displayed menu, and transmit a control input signal to the other device 440 to control the music player of the other device 440.

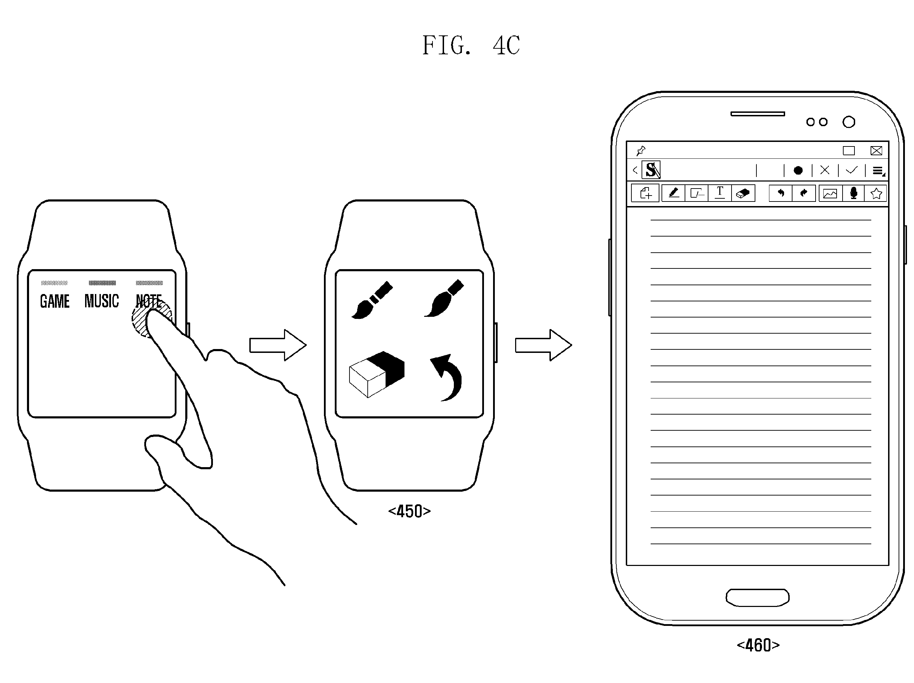

Referring to FIG. 4C, when a function menu associated with a note taking application is selected by the user, the control apparatus 450 may receive the selected function menu, and transmit a selection signal to the other device 460. The other device 460 may receive the selection signal and execute a note taking application in response to the received selection signal. When the note taking application is executed, the control apparatus 450 may display the function menu associated with the note taking application on its display. The control apparatus 450 may receive a control input via the function menu, and transmit a corresponding control signal input to the other device 460 to control the note taking application of the other device 460.

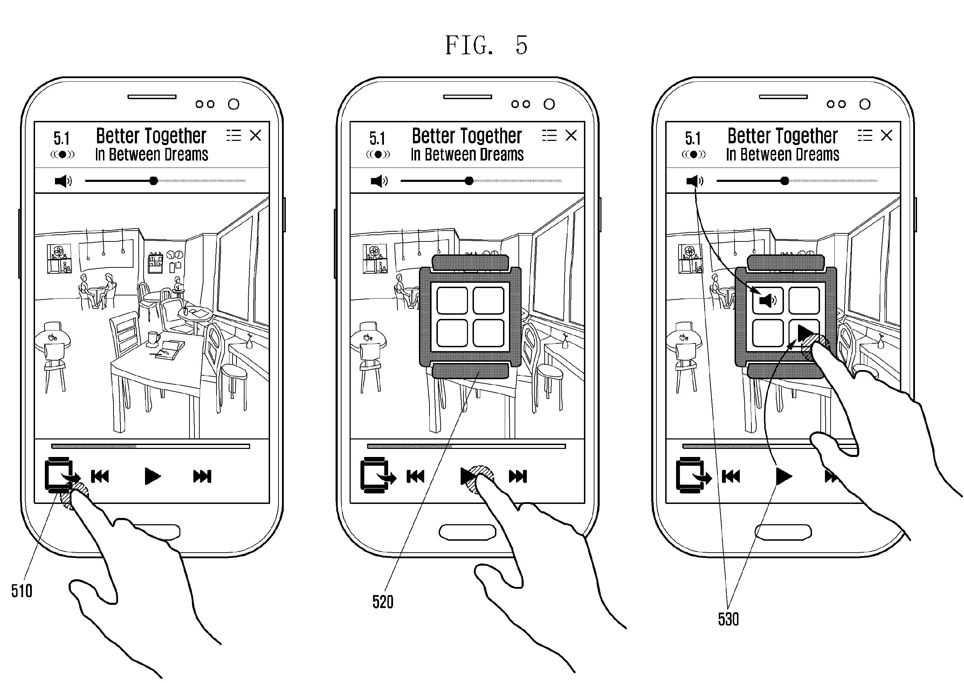

Hereinafter, in FIG. 5, the control apparatus is described as a "main device." As an example embodiment, the control apparatus may generate function menus according to each process to be used in other device.

FIG. 5 is a view illustrating an example in which a function menu is generated according to an example embodiment of the present disclosure.

Referring to FIG. 5, the control apparatus may display a visual marker indicating that the other device 510 is communicatively connected thereto. The marker may take the form of an icon, positioned on the screen where a music application is displayed. When a user selects the displayed icon 510, the control apparatus may provide editing of a layout 520 or control tool 530 for the function menu. At this time, the control apparatus may configure the layout 520 or the control tool 530 according to at least one of attributes of a process, attributes of the other device and attributes of the user. The layout 520 or the control tool 530 may be configured as to a shape, a number and a position of the layout 520 or the control tool 530. The control apparatus may assign controls to the control tool 530 based on drag inputs received from the user to the layout 520 to generate the function menu, wherein functions such as play, next track, stop, volume, etc. are dragged onto the displayed function menu, as seen in FIG. 5. The control tool 530 may include as icons or indicators at least one of a symbol, a character, a sign, an icon, a button and an image.

When an icon 510 is selected, the control tools 530 may be dragged or displayed as "floating" and thus moved to the desired position within the layout 520. In a "normal mode," selection of the control tools 530 may cause execution of the corresponding action in the music player. However, when the layout editor is activated, the control tools 530 do not cause execution of the relevant operations, but instead may be dragged as floating icons and dropped into the layout 520.

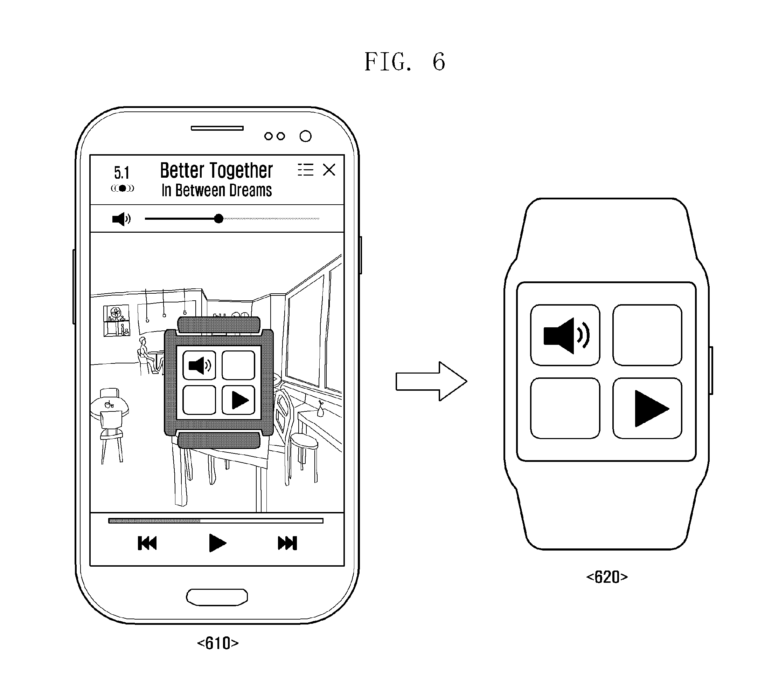

FIG. 6 illustrates an example of assigning menu functions to the control of another device according to an example embodiment of the present disclosure. Referring to FIG. 6, a control apparatus 610 may transmit a function menu to the other device 620. The control apparatus 610 may store in memory the generated function menus, each associated with a particular process.

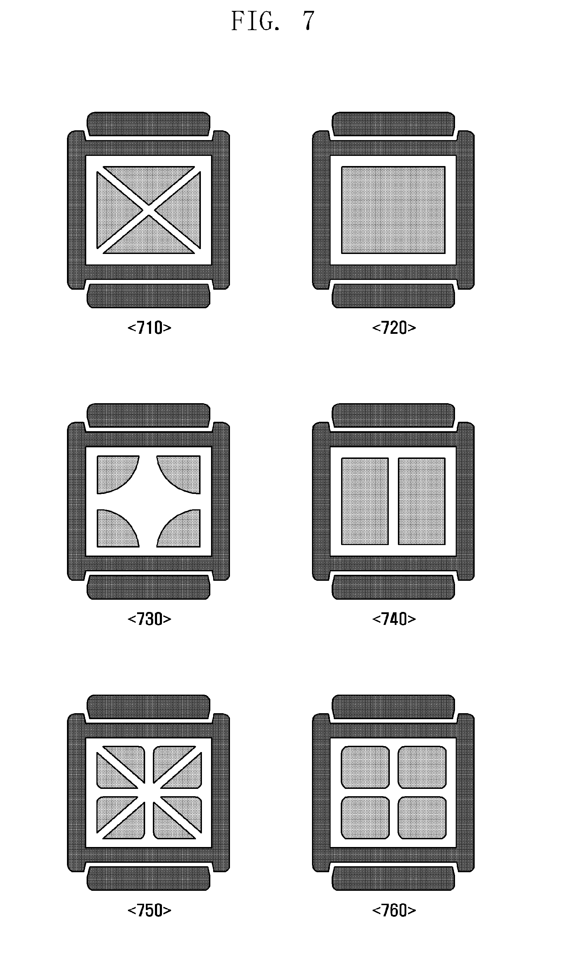

FIG. 7 illustrates example layouts of a menu for a control device according to an example embodiment of the present disclosure.

Referring to FIG. 7, a control apparatus may retrieve and utilize at least one of a shape, a number and a position of a layout or a control tool according to at least one of attributes of a process, attributes of other device and attributes of a user. For example, when an executed process is a music player application, control tools associated with the application may include functions such as play, stop, volume controls, next track and previous track. Thus, the control apparatus may set at least one of the shape, number or position of the layout of the control tools according to the attributes of the music application suitable for displaying these controls. In addition, the control apparatus may further set at least one of the shape, the number and the position of the layout or the control tool according to attributes of the other device, such as a screen size and a level of performance (e.g., memory capacity, processor speed) of the other device. In addition, the control apparatus may set at least one of the shape, the number and the position of the layout or the control tools according to attributes of a user, which may be analyzed with respect to a disposition sequence, a position, a number and any other attributes of use for an icon displayed over a background screen.

The shape may include polygons such as a quadrangle and a triangle, or non-polygonal shapes such as a circle. The shape may be selected or set with reference to the number of sections desired in the function menu or the number of control tools to be included. The position may include the center, the upper end, the lower end, the left end and the right end of a display screen.

Thus, the control apparatus may provide a layout 710 which is quadrisected in a triangle, a layout 720 which is not divided, a layout 730 having a "curtain" shape, a layout 740 which is bisected, a layout 750 which is octuplicated, and a layout 760 which is quadrisected into a quadrangle.

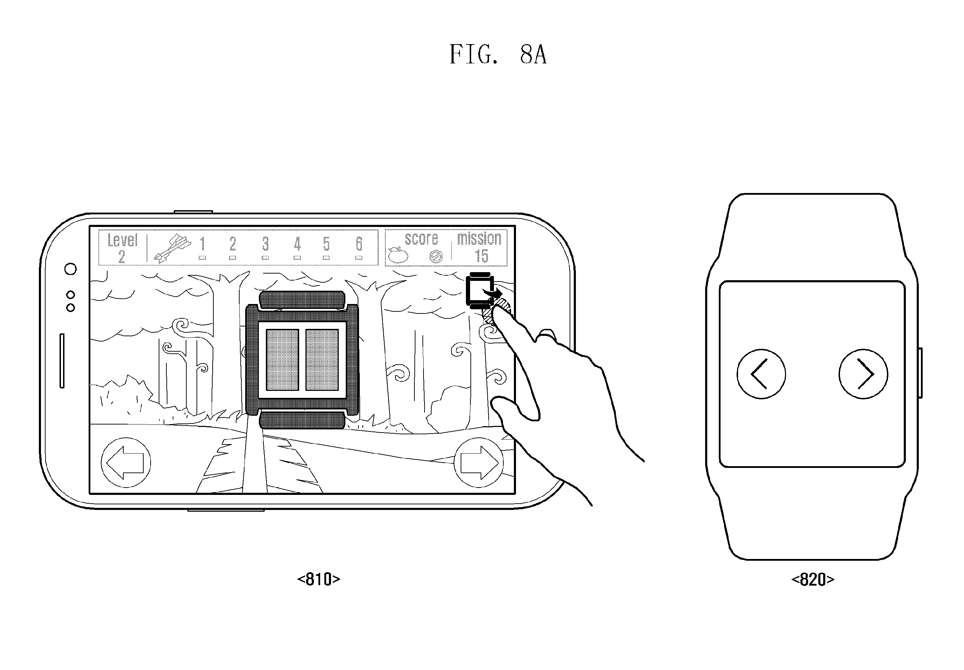

FIGs. 8A to 8C illustrates how layout and control inputs may change on the control device in accordance with a change in a displayed process on the display device, the layout and control inputs associated with attributes of each process, according to an example embodiment of the present disclosure.

Referring to FIG. 8A, when an icon representing another device 820 is displayed on a game execution screen of a device 810, the another device 820 may display a device 810 may select a layout editor, showing a menu bisected in a quadrangle, which may correspond to desirable control attributes of a game. The device 810 may thus generate a function menu, and allowing dragging and movement of a desired control tool to the displayed menu. Once configuration is completed, the device 810 may transmit the generated function menu (e.g., a left direction key and a right direction key 820) to the other device 820 for display.

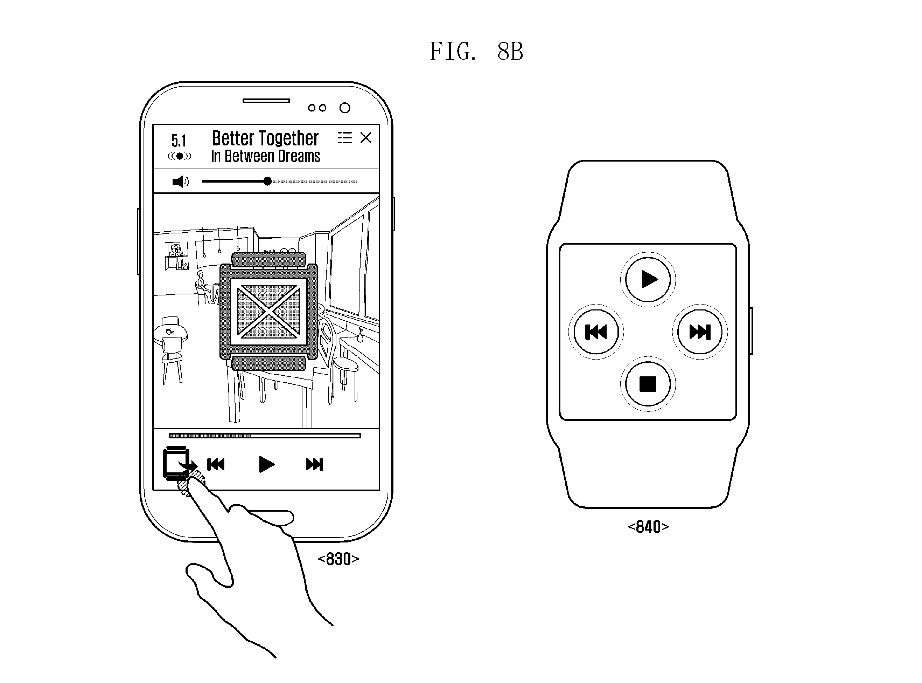

Referring to FIG. 8B, when an icon representing another device is selected by a user within a music application being executed on a device 830 , a device 830 may provide a layout editor showing a menu quadrisected with triangular sections related or corresponding to desired attributes for the music application. The device 830 may allow configuration of a function menu by dragging the desired control tools to the desired positions on the displayed function menu layout. The device 830 may then transmit the generated function menu (e.g., play, next song, stop and previous song 840) to the other device 840 for display.

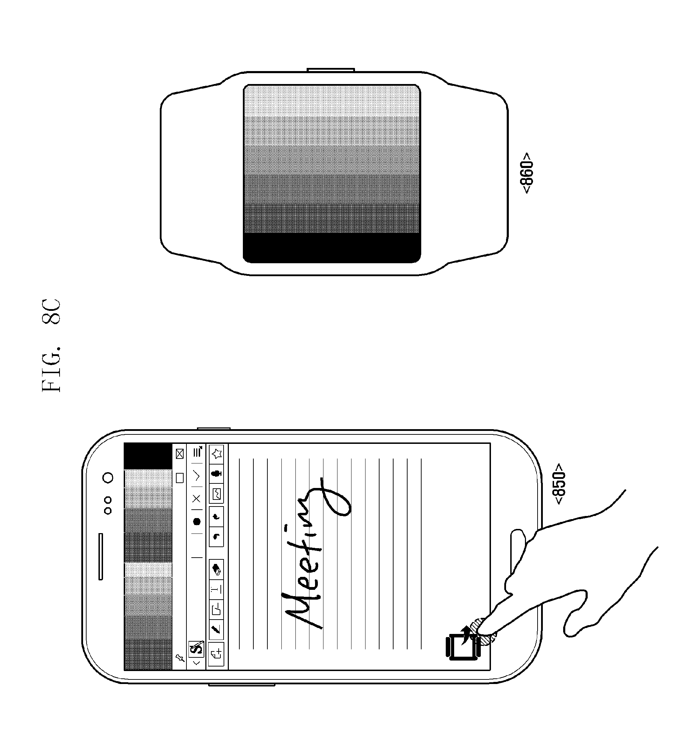

Referring to FIG. 8C, when an icon representing another device 860 is selected by a user in a note taking application displayed on a device 850, the device 850 may provide a menu allowing adjusted of attributes of the note taking application. In this example, the menu may include a plurality of colors arranged in order (e.g., a gradient of colors). The device 850 may generate the gradient function menu by configuring the menu to include a range of individual colors within the menu layout. The device 850 may then transmit the generated function menu to the other device 860.

As described with reference to the drawings, the controlling menus are often implemented on the another device, and the main applications executed on a main device, but it is understood that these examples are provided to ease understanding, and that the menus and respective applications might be implemented on any such device.

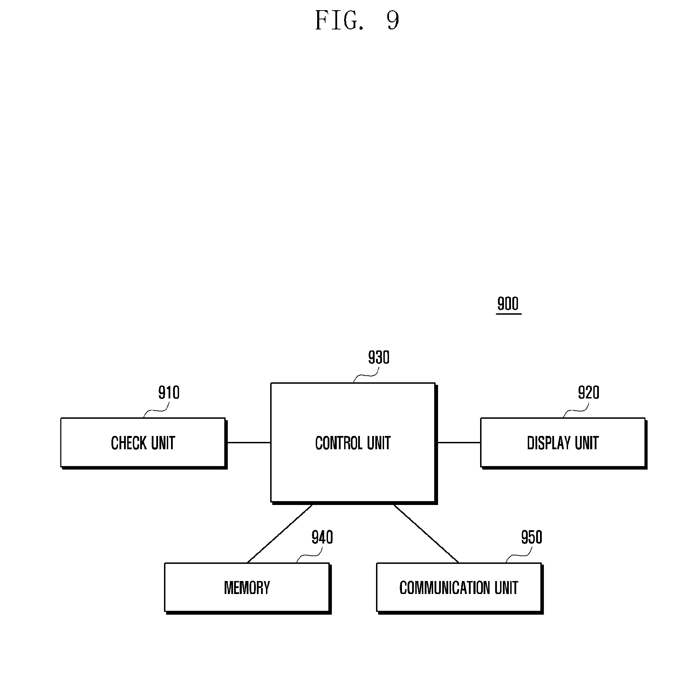

FIG. 9 is a block diagram illustrating a control apparatus according to an example embodiment of the present disclosure.

Referring to FIG. 9, the control apparatus 900 includes a check unit 910, a display unit 920 and a control unit 930. The control apparatus 900 may be implemented as an auxiliary device or a main device. Firstly, the case in which the control apparatus 900 is the "auxiliary device" will be described.

The check unit 910 detects whether another device is connected to the control apparatus. Here, "connected" may mean that the control apparatus is physically or electrically connected to the other device, such as via a wireless "pairing" operation. The "other" device may refer to a "main device". When the control apparatus is connected to the other device through a network, the check unit 910 may detect the process executing on the other device. The process may include at least one of an application, a program, an Operating System (OS) and middleware which are executed in the other device. Notably, the check unit 910 may be implemented as a separate unit from the control unit 930, or it may be implemented as a single unit so that the control apparatus 900 operates with a single unified processing module.

The display unit 920 may display a function menu associated with the detected process. The function menu is related to various control tools such as a volume control, playing media, direction keys, a start and an end, which may be dependent on the particular process being executed

The control unit 930 may transmit a control signal corresponding to a user input detected through the displayed function menu to the other device, and thereby control functions of the process executing on the other device. For example, when the user selects a desired control tool in the function menu, the control apparatus transmits a control signal associated with the selected control tool to the other device, causing it to execute the specified action. Thus, the control apparatus allows non-local third party control of a process executing on another device.

As an example embodiment, the control unit 930 may store a plurality of function menus, each associated with particular process in memory, and may display each function menu (e.g., for a game, a music application or a note taking application) through the display unit 920. When a user selection is detected on a portion of the displayed menu, the control unit 930 may transmit a signal corresponding to the selection to the other device, which may execute a corresponding function.

An example embodiment in which the control apparatus 900 is the "main device" will now described.

The control unit 930 may generate a function menu according to each process to be used in other device, which may be an "auxiliary device." The control unit 930 may display a layout of a function menu. The control unit 930 may allow configuration of the function menu by enabling control tools displayed on the display 920 to be manually dragged by the user (e.g., by a drag gesture) to the desired position within the layout of the function menu. The control unit 930 may further retrieve or set the layout (e.g., that is, the number and positioning of buttons, icons or sections within the menu) according to at least one of attributes of the process, attributes of the other device and attributes of the user.

The control unit 930 may thus set at least one of a shape, a number and a position of the layout or the control tool according to at least one of the attributes of the process, the attributes of the other device and the attributes of the user. The shape may be a polygon such as a quadrangle and a triangle, or alternatively a variety of circular shapes. The number of sections, buttons or icons may depend on, for example, a number of control tools to be included in the function menu. The position of each function may be situated at, for example, the center, the upper end, the lower end, the left end and the right end of a display of the other device. The control tools may be displayed using at least one of a symbol, a character, a sign, an icon, a button and an image.

The control unit 930 may store the generated function menus in a memory, each associated to a particular process, and may transmit the stored function menus to the other device.

The memory unit 940 may be used to store the generated function menus, from which the menus may be retrieved before transmission to other remote devices. The communication unit 950 may be used to communication with other remote devices, and transmit and receive information, such as the function menu, commands to execute the application, controls for the application, etc. The communication unit 950 may be wired or wireless. A wireless embodiment of the communication unit 950 may be implemented utilizing various communication schemes such as Bluetooth, Near Field Communication (NFC) or a sound wave communication, as described previously, and the control apparatus 900 may monitor in real time whether the other device is connected to the control apparatus via the communication unit 950. According to an example embodiment of the present disclosure, other device effectively can be controlled using one control apparatus.

The embodiments disclosed in the present specifications and drawings were provided merely to readily describe and to help a thorough understanding of the present disclosure but not intended to limit the ambit of the present disclosure. Therefore, it should be construed that all modifications or modified forms drawn by the technical idea of the present disclosure in addition to the embodiments disclosed herein are included in the ambit of the present disclosure.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using a general purpose computer, or a special processor or in programmable or dedicated hardware, such as an ASIC or FPGA.

As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein.

Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" referred to herein is to be understood as comprising hardware such as a processor or microprocessor configured for a certain desired functionality, or a non-transitory medium comprising machine executable code, in accordance with statutory subject matter under 35 U.S.C. §101 and does not constitute software per se.

## Claims

1. A method, comprising:
detecting, by a processor, an application being executed in a remote device;
displaying, by a display, a function menu associated with the application; and
in response to detecting a selection in the displayed function menu, transmitting a control signal corresponding to the selection to the remote device to control a particular function of the application.

2. The method of claim 1, wherein the application is detected via a data communication network.

3. The method of claim 1, further comprising:
storing a plurality of function menus in a memory, each of the plurality of function menus associated with at least one particular application.

4. The method of claim 3, wherein the displaying the function menu further comprises:
retrieving one of the plurality of function menus associated with the application and displaying by the display the retrieved one of the plurality of function menus.

5. The method of claim 1, wherein the displayed function menu is received from the remote device.

6. The method of claim 1, further comprising:
detecting a drag gesture moving at least one icon to at least one configurable section, by a remote device; and
transmitting the function menu containing the moved at least one icon for display to the remote device such that an input to the function menu displayed on the remote device is received by the processor to control the application running on the display unit.

7. The method of claim 6, wherein the function menu includes a plurality of sections including the configurable section, and a layout of the plurality of sections is set by the processor according to attributes related to at least one of the application, the remote device, and a user.

8. The method of claim 7, wherein the attributes further include at least one of a shape of one of the plurality sections and a total number of sections.

9. The method of claim 8, wherein transmitting the function menu further includes transmission of at least one of a symbol, a character, sign, an icon, a button and an image for display of the function menu on the remote device.

10. The method of claim 7, wherein:
attributes related to the application includes a function executable to control the application;
attributes related to the remote device include at least one of a display size and a performance capacity of the remote device; and
attributes of the user include a configuration of the function menu as configured by the user.

11. An electronic device comprising:
a display unit; and
at least one processor configured to:
detect, an application being executing on a remote device,
display a function menu associated with the application in the display unit, and
in response to detecting a selection in the displayed function menu, transmit a control signal corresponding to the selection to the remote device to control a particular function of the application.

12. The electronic device of claim 11, further comprising a memory, the processor further configured to store a plurality of function menus in the memory, each of the plurality of function menus associated with at least one particular application.

13. The electronic device of claim 12, wherein the displaying the function menu further comprises retrieving one of the plurality of function menus associated with the application and displaying the retrieved one of the plurality of function menus.

14. The electronic device of claim 11, wherein the displayed function menu is received from the remote device.

15. The electronic device of claim 11, wherein the application is executed on the remote device when:
a plurality of applications executable by the remote device is displayed on the display, and the processor detects a selection of the application from among the plurality of applications; and
an execution signal is transmitted to the remote device to execute the application.
